(19) Europäisches Patentamt
European Patent Office
Office européen des brevets

(11) EP 3 753 988 B1

(12) EUROPEAN PATENT SPECIFICATION

(45) Date of publication and mention of the grant of the patent:
**13.04.2022 Bulletin 2022/15**

(21) Application number: **20180435.8**

(22) Date of filing: **17.06.2020**

(51) International Patent Classification (IPC):
***C09D 11/328*** *(2014.01)* ***D06P 1/39*** *(2006.01)*
***D06P 5/30*** *(2006.01)*

(52) Cooperative Patent Classification (CPC):
**C09D 11/328; D06P 1/39; D06P 5/30**

(54) **AQUEOUS INK COMPOSITION FOR INK JET TEXTILE PRINTING AND TEXTILE PRINTING METHOD**

WÄSSRIGE TINTENZUSAMMENSETZUNG FÜR TINTENSTRAHLDRUCK- UND TEXTILDRUCKVERFAHREN

COMPOSITION D'ENCRE AQUEUSE POUR IMPRESSION SUR TEXTILE À JET D'ENCRE ET PROCÉDÉ D'IMPRESSION SUR TEXTILE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.06.2019 JP 2019113620**

(43) Date of publication of application:
**23.12.2020 Bulletin 2020/52**

(73) Proprietor: **Seiko Epson Corporation**
**Tokyo 160-8801 (JP)**

(72) Inventors:
- **WAKUSHIMA, Yuki**
  **Suwa-shi, Nagano 392-8502 (JP)**
- **KOMATSU, Hidehiko**
  **Suwa-shi, Nagano 392-8502 (JP)**
- **MARUYAMA, Hiroaki**
  **Suwa-shi, Nagano 392-8502 (JP)**

(74) Representative: **Miller Sturt Kenyon**
**9 John Street**
**London WC1N 2ES (GB)**

(56) References cited:
**EP-A1- 3 342 927**
**GB-A- 2 156 839**
**JP-A- 2018 109 140**
**US-A- 3 756 771**
**US-A- 4 828 572**

EP 3 753 988 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

BACKGROUND

1. Technical Field

The present disclosure relates to an aqueous ink composition for ink jet textile printing and to a textile printing method.

2. Related Art

To record images by an ink jet method, various aqueous ink compositions for ink jet textile printing are used. Such aqueous ink compositions for ink jet textile printing contain colorants to obtain images of desirable colors.

In aqueous ink compositions for ink jet textile printing, dyes and pigments are used as colorants. For such colorants, many capabilities, such as coloring properties and dispersion stability, are required. For example, JP-A-2018-109140 proposes an aqueous ink composition for ink jet textile printing that can produce a specific color with good coloring properties as printed textiles and suppress changes in color (light resistance) over time and that exhibits excellent discharge reliability (recovery properties from clogging during non-use and/or continuous discharge stability).

The capabilities of a dye ink, such as coloring properties, water solubility, and storage stability as an ink, depend on the composition and/or components contained in the ink but also heavily depend on the molecular structure of a dye contained. Moreover, it has been revealed that many capabilities of an ink also vary depending on not only ions of a dye molecule but also counterions dissociated in the ink.

In the technique described in JP-A-2018-109140, the correlation between the molecular structure of a dye and the capabilities of an ink is not necessarily obvious. In addition, the correlation of counterions with ink characteristics is hardly taken into account as well. Accordingly, further improvements in ink characteristics can be expected by focusing on the molecular structure of a dye and the composition of ions in the ink.

SUMMARY

An embodiment of an aqueous ink composition for ink jet textile printing according to the present disclosure contains: lithium ions; sodium ions; and a dye in which a plurality of ligands represented by any of the following formula (1), formula (2), and formula (3) coordinate to a metal atom:

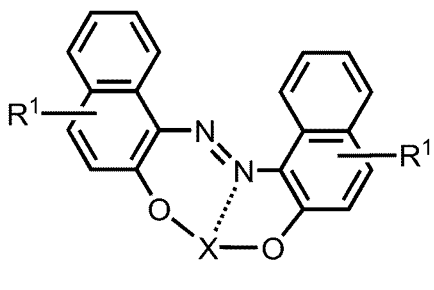

··· (1)

where: X represents a coordinated metal atom; $R^1$ is selected from H and $SO_3Z$; a plurality of $R^1$ may be the same or different from each other; at least one of $R^1$ is $SO_3Z$; and Z is at least one selected from a hydrogen atom, an alkali metal atom, an alkaline earth atom, and ammonium,

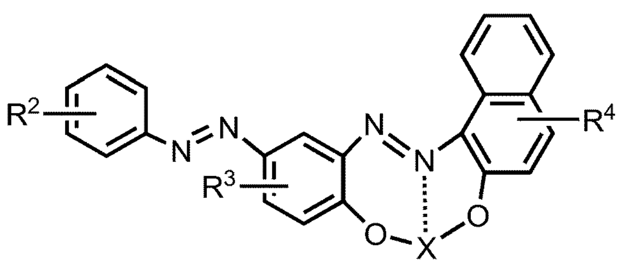

··· (2)

where: X is a coordinated metal atom; $R^2$, $R^3$, and $R^4$ are each independently selected from H and $SO_3Z$; and Z is at

least one selected from a hydrogen atom, an alkali metal atom, an alkaline earth atom, and ammonium,

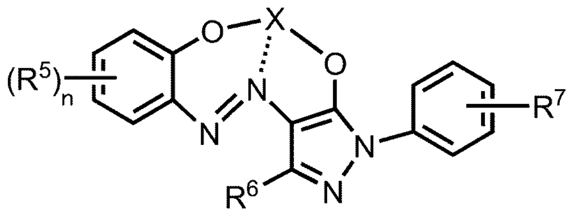

··· (3)

where: X is a coordinated metal atom; $R^5$ is selected from H, $NO_2$, an alkyl group having 1 or more and 3 or less carbon atoms, Cl, and $SO_3Z$; n is an integer of 1 or more and 4 or less; when a plurality of $R^5$ exist, a plurality of $R^5$ may be the same or different from each other; $R^6$ is selected from H, $CH_3$, and $SO_3Z$; $R^7$ is selected from H, $NO_2$, Cl, and $SO_3Z$; at least one of $R^5$, $R^6$, and $R^7$ is $SO_3Z$; and Z is at least one selected from a hydrogen atom, an alkali metal atom, an alkaline earth atom, and ammonium.

In the above-described embodiment of an aqueous ink composition for ink jet textile printing, the dye may be selected from: a dye in which two ligands represented by formula (1) coordinate to the metal atom; a dye in which one ligand represented by formula (2) and one ligand represented by formula (3) coordinate to the metal atom; and a dye in which two ligands represented by formula (3) coordinate to the metal atom.

In either of the above-described embodiments of an aqueous ink composition for ink jet textile printing, a concentration ratio of the lithium ions to the sodium ions ($Li^+/Na^+$) may be 0.01 or more and 0.6 or less.

In any of the above-described embodiments of an aqueous ink composition for ink jet textile printing, the metal atom may be a chromium atom.

In any of the above-described embodiments of an aqueous ink composition for ink jet textile printing, one or more of a lactam and a polyol may be contained as organic solvents.

In any of the above-described embodiments of an aqueous ink composition for ink jet textile printing, a content of the dye may be 2.0% by mass or more and 8.0% by mass or less based on a total amount of the ink composition.

In any of the above-described embodiments of an aqueous ink composition for ink jet textile printing, an object on which textile printing is performed may be a nylon fabric or a nylon/urethane blended fabric.

An embodiment of an ink jet textile printing method according to the present disclosure includes discharging, from an ink jet head, the aqueous ink composition for ink jet textile printing of any of the above-described embodiments, thereby attaching to a nylon fabric or a nylon/urethane blended fabric.

## DESCRIPTION OF EXEMPLARY EMBODIMENTS

Hereinafter, embodiments of the present disclosure will be described. The following embodiments will be described as examples of the present disclosure.

### 1. Aqueous Ink Composition for Ink Jet Textile Printing

An aqueous ink composition for ink jet textile printing of an embodiment is used by attaching, by an ink jet method, to a fabric to which a pretreatment composition described hereinafter has been attached. First, an aqueous ink composition for ink jet textile printing will be described.

An aqueous ink composition for ink jet textile printing of the embodiment contains a dye, lithium ions, and sodium ions.

### 1. 1. Dyes

An aqueous ink composition for ink jet textile printing of the embodiment contains a dye in which a plurality of ligands represented by any of the following formula (1), formula (2), and formula (3) coordinate to a metal atom:

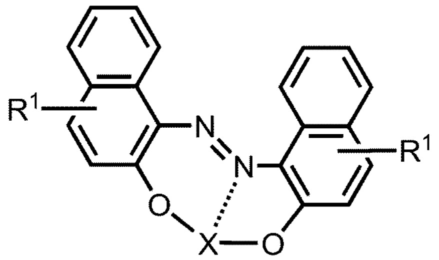

... (1)

where: X represents a coordinated metal atom; $R^1$ is selected from H and $SO_3Z$; a plurality of $R^1$ may be the same or different from each other; at least one of $R^1$ is $SO_3Z$; and Z is at least one selected from a hydrogen atom, an alkali metal atom, an alkaline earth atom, and ammonium,

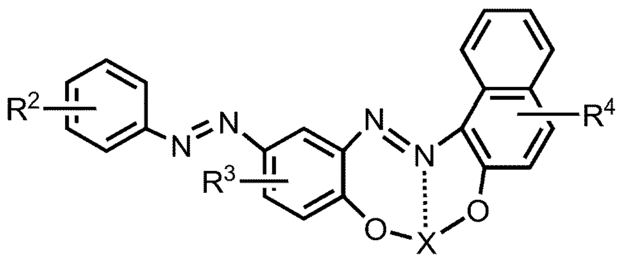

... (2)

where: X is a coordinated metal atom; $R^2$, $R^3$, and $R^4$ are each independently selected from H and $SO_3Z$; and Z is at least one selected from a hydrogen atom, an alkali metal atom, an alkaline earth atom, and ammonium,

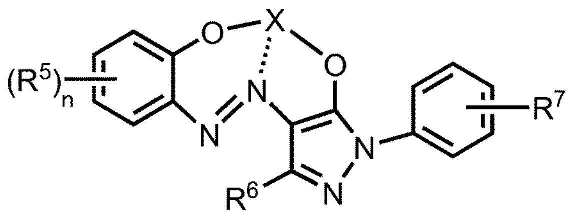

... (3)

where: X is a coordinated metal atom; $R^5$ is selected from H, $NO_2$, an alkyl group having 1 or more and 3 or less carbon atoms, Cl, and $SO_3Z$; n is an integer of 1 or more and 4 or less; when a plurality of $R^5$ exist, a plurality of $R^5$ may be the same or different from each other; $R^6$ is selected from H, $CH_3$, and $SO_3Z$; $R^7$ is selected from H, $NO_2$, Cl, and $SO_3Z$; at least one of $R^5$, $R^6$, and $R^7$ is $SO_3Z$; and Z is at least one selected from a hydrogen atom, an alkali metal atom, an alkaline earth atom, and ammonium.

Here, X, which is a metal atom to which any of ligands represented by formula (1), formula (2), and formula (3) coordinates, may be a transition metal atom. Specifically, X is a metal atom selected from chromium, cobalt, nickel, and copper and is preferably a chromium atom.

Here, in ligands represented by formula (1), formula (2), and formula (3), Z is more preferably at least one selected from alkali metal atoms, further preferably at least one selected from lithium, sodium, and potassium, and particularly preferably selected from lithium and sodium. By selecting Z from sodium and lithium, it is possible to incorporate sodium ions and lithium ions into an aqueous ink composition for ink jet textile printing without using other substances.

A more preferable exemplary dye contained in an aqueous ink composition for ink jet textile printing of the embodiment is one or more selected from: a dye in which two ligands represented by formula (1) coordinate to the same metal atom; a dye in which one ligand represented by formula (2) and one ligand represented by formula (3) coordinate to the same metal atom; and a dye in which two ligands represented by formula (3) coordinate to the same metal atom.

The dye contained in an aqueous ink composition for ink jet textile printing of the embodiment is more preferably any of the dyes represented by the following structures. In these structures, Z is at least one selected from a hydrogen atom, an alkali metal atom, an alkaline earth atom, and ammonium and is preferably Li or Na.

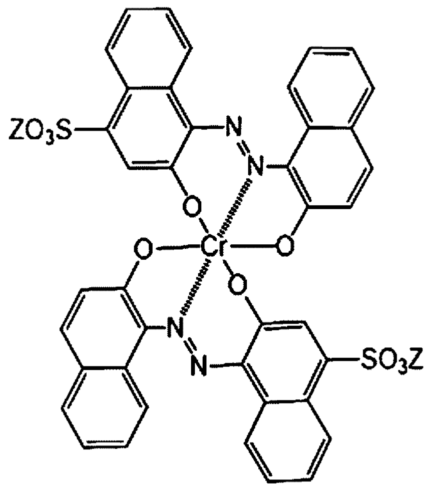

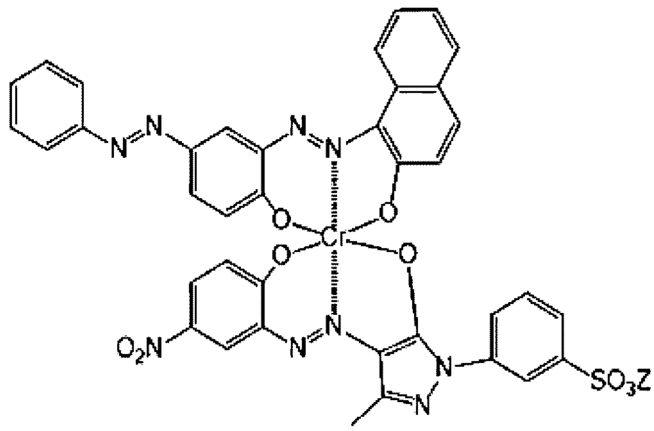

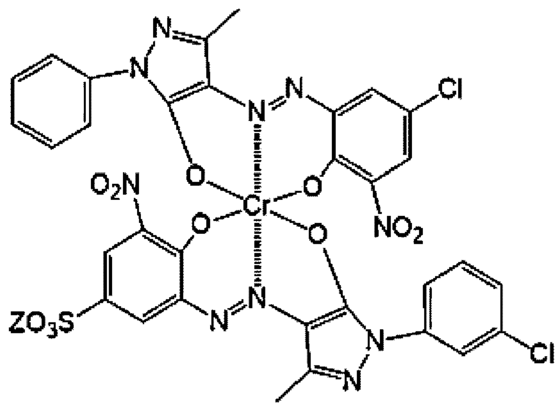

These dyes exhibit satisfactory light and water resistance due to relatively large ligand structures compared with molecular structures of other dyes. In addition, it is possible to achieve further satisfactory coloring properties even at a low concentration due to the presence of a plurality of ligands as chromophores. Accordingly, satisfactory coloring after textile printing is achieved even when the content in an aqueous ink composition for ink jet textile printing is relatively low. Moreover, it is possible to achieve satisfactory coloring properties after textile printing even when the amount of an aqueous ink composition for ink jet textile printing attached to a fabric is relatively small.

In general, when textile printing is performed on water-repellent fabrics, such as nylon fabrics, by using an aqueous ink, it is needed to increase a dye concentration in the aqueous ink and/or the amount of the ink used to achieve satisfactory coloring. Moreover, even when a dye concentration and/or the amount of ink used are increased, conventional aqueous inks exhibit unsatisfactory attachment to and/or wetting of such fabrics in some cases without achieving coloring proportional to an increase in dye concentration and/or the amount of ink used.

An aqueous ink composition for ink jet textile printing of the embodiment containing the above-described dye

can achieve satisfactory coloring properties even when the amount attached to a fabric is small. Accordingly, it is possible to perform textile printing, for example, on fabrics containing nylon while achieving satisfactory coloring properties.

An aqueous ink composition for ink jet textile printing of the embodiment may contain a plurality of the above-described dyes. In an aqueous ink composition for ink jet textile printing of the embodiment, the total content of dyes in which a plurality of ligands represented by any of formula (1), formula (2), and formula (3) coordinate to a metal ion is 1% by mass or more and 15% by mass or less, preferably 1.5% by mass or more and 10% by mass or less, and more preferably 2% by mass or more and 8% by mass or less based on the total mass of the aqueous ink composition for ink jet textile printing.

Further, an aqueous ink composition for ink jet textile printing of the embodiment may contain a dye other than the above-described dyes. However, an aqueous ink composition for ink jet textile printing of the embodiment contains preferably only the above-described dyes and more preferably one of the above-described dyes alone. In this case, other dyes may be contained provided that such dyes are regarded as impurities. Specifically, the total of the dyes as impurities is 1% by mass or less, preferably 0.1% by mass or less, more preferably 0.01% by mass or less, further preferably 0.001% by mass or less, and particularly preferably 0.0001% by mass or less based on the total dyes contained in the aqueous ink composition for ink jet textile printing. As a result, textile printing can be performed substantially only by the above-described dyes while achieving excellent coloring properties.

1. 2. Lithium Ions and Sodium Ions

An aqueous ink composition for ink jet textile printing of the embodiment contains lithium ions and sodium ions. Sources of lithium ions and sodium ions are not particularly limited but are preferably counterions of the above-described dyes. In other words, lithium ions and sodium ions are preferably lithium and sodium that are selected for "Z" in the above-described formula (1), formula (2), and formula (3) and that are dissociated in the composition. Moreover, lithium ions and sodium ions may be derived from other components and may be supplied into the composition, for example, by a lithium salt and a sodium salt of an inorganic compound or an organic compound.

By including both lithium ions and sodium ions, an aqueous ink composition for ink jet textile printing exhibits satisfactory storage stability and recovery properties from clogging. In other words, the aqueous ink composition for ink jet textile printing exerts both an effect of enhancing water solubility by lithium ions and an effect of enhancing storage stability by sodium ions. To put it differently, sodium ions suppress deterioration in storage stability due to lithium ions while lithium ions suppress deterioration in water solubility due to sodium ions.

In an aqueous ink composition for ink jet textile printing of the embodiment, the content ratio of lithium ions and sodium ions, as a concentration ratio of lithium ions to sodium ions ($Li^+/Na^+$), is 0.001 or more and 1.5 or less, preferably 0.01 or more and 1.3 or less, and more preferably 0.01 or more and 0.6 or less. Within these ranges, it is possible to achieve both water solubility and storage stability. According to an aqueous ink composition for ink jet textile printing of the embodiment, the dye in which a plurality of ligands represented by any of formula (1), formula (2), and formula (3) coordinate to a metal atom exhibits relatively high water solubility. For this reason, even if the content of lithium ions is small relative to the content of sodium ions, satisfactory water solubility is readily ensured.

In an aqueous ink composition for ink jet textile printing of the embodiment, the content of lithium ions is preferably 3 ppm or more and 1,700 ppm or less, more preferably 25 ppm or more and 1,000 ppm or less, and further preferably 50 ppm or more and 300 ppm or less.

In an aqueous ink composition for ink jet textile printing of the embodiment, the content of sodium ions is preferably 600 ppm or more and 3,500 ppm or less, more preferably 700 ppm or more and 3,000 ppm or less, and further preferably 900 ppm or more and 2,900 ppm or less.

1. 3. Water

An aqueous ink composition for ink jet textile printing according to the embodiment may contain water. Exemplary water includes water from which ionic impurities have been removed as much as possible like pure water, such as deionized water, ultrafiltration water, reverse osmosis water, and distilled water; as well as ultrapure water. Moreover, by using water that has been sterilized by UV irradiation or addition of hydrogen peroxide, for example, it is possible to suppress growth of bacteria and/or fungi during long-term storage of the aqueous ink composition for ink jet textile printing.

The water content is 30% by mass or more, preferably 40% by mass or more, more preferably 45% by mass or more, and further preferably 50% by mass or more based on the total amount of the aqueous ink composition for ink jet textile printing. Here, water in the aqueous ink composition for ink jet textile printing includes, for example, water added to a resin particle dispersion used as a raw material. By controlling the water content to 30% by mass or more, it is possible to achieve a relatively low viscosity of the aqueous ink composition for ink jet textile printing. Moreover, the upper limit of the water content is preferably 90% by mass or less, more preferably 85% by mass or less, and further preferably 80% by mass or less based on the total amount of the aqueous ink composition for ink jet textile printing.

1. 4. Other Components

An aqueous ink composition for ink jet textile printing of the embodiment may contain the following components.

1. 4. 1. Cyclic Amides (Lactams)

An aqueous ink composition for ink jet textile printing of the embodiment may contain a cyclic amide, such as a lactam. Such cyclic amides readily dissolve the above-described dyes and act to suppress solidification or drying of the aqueous ink composition for ink jet textile printing. Moreover, moisture retention is enhanced by including a cyclic amide. Consequently, solidification or drying of the aqueous ink composition for ink jet textile printing can be effectively suppressed.

Examples of the cyclic amide include γ-lactams, such as 2-pyrrolidone, 1-methyl-2-pyrrolidone (N-methyl-2-pyrrolidone), 1-ethyl-2-pyrrolidone (N-ethyl-2-pyrrolidone), N-vinyl-2-pyrrolidone, 1-propyl-2-pyrrolidone, 1-butyl-2-pyrrolidone; β-lactams; and δ-lactams. These cyclic amides may be used alone or in combination.

If contained, the content of the cyclic amide is 1% by mass or more and 30% by mass or less, preferably 5% by mass or more and 30% by mass or less, more preferably 5% by mass or more and 25% by mass or less, and further preferably 7% by mass or more and 15% by mass or less based on the total mass of the aqueous ink composition for ink jet textile printing.

When the total content of cyclic amides falls within the above-mentioned ranges, it is possible to sufficiently dissolve a dye and to further increase the amount (concentration) of the dye added.

1. 4. 2. Polyols

An aqueous ink composition for ink jet textile printing of the embodiment may contain a polyol, such as an alkyl polyol. By including a polyol, it is possible to further enhance moisture retention of the aqueous ink composition for ink jet textile printing, to ensure excellent discharge stability by an ink jet method, and to suppress moisture evaporation from a recording head during long-term non-use. Moreover, by including a polyol, it is possible to satisfactorily maintain recovery properties during non-use and/or stability in continuous discharge even when a type of dye that tends to cause nozzle clogging is used.

Specific examples of the polyol include 1,2-butanediol, 1,2-pentanediol, 1,2-hexanediol, 1,2-heptanediol, 1,3-propanediol, 1,3-butanediol, 1,4-butanediol, 1,5-pentanediol, 1,6-hexanediol, 2-ethyl-2-methyl-1,3-propanediol, 2-methyl-2-propyl-1,3-propanediol, 2-methyl-1,3-propanediol, 2,2-dimethyl-1,3-propanediol, 3-methyl-1,3-butanediol, 2-ethyl-1,3-hexanediol, 3-methyl-1,5-pentanediol, 2-methylpentane-2,4-diol, diethylene glycol, dipropylene glycol, triethylene glycol, and glycerol. These polyols may be used alone or in combination.

If contained, the total content of polyols is preferably 5% by mass or more and 30% by mass or less, more preferably 8% by mass or more and 25% by mass or less, and further preferably 10% by mass or more and 20% by mass or less based on the total mass of the aqueous ink composition for ink jet textile printing.

1. 4. 3. Organic Solvents

An aqueous ink composition for ink jet textile printing of the embodiment may contain an organic solvent. Examples of the organic solvent include betaine compounds and lactones, such as γ-butyrolactone. Moreover, the aqueous ink composition for ink jet textile printing of the embodiment may contain a glycol ether. By including such organic solvents, it is possible in some cases to control the permeation rate through and/or wettability with a fabric of the aqueous ink composition for ink jet textile printing.

The glycol ether is preferably a monoalkyl ether of a glycol selected from ethylene glycol, diethylene glycol, triethylene glycol, polyethylene glycol, propylene glycol, dipropylene glycol, tripropylene glycol, polypropylene glycol, and polyoxyethylene-polyoxypropylene glycol. More preferable examples include methyl triglycol (triethylene glycol monomethyl ether), butyl triglycol (triethylene glycol monobutyl ether), butyl diglycol (diethylene glycol monobutyl ether), and dipropylene glycol monopropyl ether.

A plurality of such organic solvents may be blended and used. Here, the amount added in total of the organic solvents described in this section is 0.2% by mass or more and 30.0% by mass or less, preferably 1.0% by mass or more and 20.0% by mass or less, and more preferably 1.5% by mass or more and 10.0% by mass or less based on the total amount of the aqueous ink composition for ink jet textile printing from a viewpoint of adjusting the viscosity of the aqueous ink composition for ink jet textile printing and preventing clogging by a moisture retention effect.

1. 4. 4. Surfactants

An aqueous ink composition for ink jet textile printing according to the embodiment may contain a surfactant. A surfactant may be used for lowering surface tension of the aqueous ink composition for ink jet textile printing, thereby adjusting or enhancing wettability with a fabric (permeability into a fabric or the like). For such surfactants, any of nonionic surfactants, anionic surfactants, cationic surfactants, and amphoteric surfactants may be used. Moreover, these surfactants may be used in combination. Among these surfactants, acetylenic glycol surfactants, silicone surfactants, and fluorosurfactants can be preferably used.

Examples of the acetylenic glycol surfactants include, but are not particularly limited to, Surfynol 104, 104E, 104H, 104A, 104BC, 104DPM, 104PA, 104PG-50, 104S, 420, 440, 465, 485, SE, SE-F, 504, 61, DF37, CT111, CT121, CT131, CT136, TG, GA, and DF110D (trade names from Air Products and Chemicals Inc.); Olfine B, Y, P, A, STG, SPC, E1004, E1010, PD-001, PD-002W, PD-003, PD-004, PD-005, EXP. 4001, EXP. 4036, EXP. 4051, AF-103, AF-104, AK-02, SK-14, and AE-3 (trade names from Nissin Chemical Industry Co. Ltd.); and Acetylenol E00, E00P, E40, and E100 (trade names from Kawaken Fine Chemicals Co., Ltd.).

The silicone surfactants are not particularly limited but are preferably polysiloxane compounds, for example. Such polysiloxane compounds are not particularly limited but are polyether-modified organosiloxanes, for example. Exemplary commercial products of such polyether-modified organosiloxanes include BYK-306, BYK-307, BYK-333, BYK-341, BYK-345, BYK-346, and BYK-348 (trade names from BYK Japan KK); KF-351A, KF-352A, KF-353, KF-354L, KF-355A, KF-615A, KF-945, KF-640, KF-642, KF-643, KF-6020, X-22-4515, KF-6011, KF-6012, KF-6015, and KF-6017 (trade names from Shin-Etsu Chemical Co., Ltd.).

As the fluorosurfactants, fluorine-modified polymers are preferably used, and specific examples include BYK-340 (from BYK Japan KK).

When one or more surfactants are added to the aqueous ink composition for ink jet textile printing, 0.01% by mass or more and 3% by mass or less, preferably 0.05% by mass or more and 2% by mass or less, further preferably 0.1% by mass or more and 1.5% by mass or less, and particularly preferably 0.2% by mass or more and 1% by mass or less of surfactants are preferably added in total based on the total aqueous ink composition for ink jet textile printing.

Moreover, by including a surfactant in the aqueous ink composition for ink jet textile printing, stability tends to increase during discharge of the ink from a head. Further, in some cases, the use of an appropriate amount of surfactant can enhance permeability into a fabric and increase contact with a pretreatment composition described hereinafter.

1. 4. 5. pH Adjusters

An ink composition of the embodiment may be added with a pH adjuster. Examples of the pH adjuster include, but are not particularly limited to, appropriate combinations of an acid, a base, a weak acid, and/or a weak base. Examples of the acid and base used for such combinations include inorganic acids, such as sulfuric acid, hydrochloric acid, and nitric acid; inorganic bases, such as lithium hydroxide, sodium hydroxide, potassium hydroxide, monopotassium phosphate, disodium phosphate, potassium carbonate, sodium carbonate, sodium bicarbonate, and ammonia; organic bases, such as triethanolamine, diethanolamine, monoethanolamine, tripropanolamine, triisopropanolamine, diisopropanolamine, and tris(hydroxymethyl)aminomethane (THAM); organic acids, such as adipic acid, citric acid, succinic acid, and lactic acid; Good's buffers, such as N,N-bis(2-hydroxyethyl)-2-aminoethanesulfonic acid (BES), 2-[4-(2-hydroxyethyl)-1-piperazinyl]ethanesulfonic acid (HEPES), 2-morpholinoethanesulfonic acid (MES), N-(carbamoylmethyl)iminodiacetic acid (ADA), piperazine-1,4-bis(2-ethanesulfonic acid) (PIPES), N-(2-acetamido)-2-aminoethanesulfonic acid (ACES), cholamine chloride hydrochloride, N-tris(hydroxymethyl)methyl-2-aminoethanesulfonic acid (TES), acetamidoglycine, tricine, glycinamide, and bicine; phosphate buffers; citrate buffers; and Tris buffers.

1. 4. 6. Urea Derivatives

An aqueous ink composition for ink jet textile printing may contain a urea derivative as a humectant or as a dyeing aid for improving dyeing properties of dyes. Specific examples of the urea derivative include urea, ethyleneurea, tetramethylurea, thiourea, and 1,3-dimethyl-2-imidazolidinone. If contained, the content of a urea derivative may be set to 1% by mass or more and 10% by mass or less based on the total mass of the ink composition.

1. 4. 7. Saccharides

A saccharide may be used to suppress solidification or drying of an aqueous ink composition for ink jet textile printing. Specific examples of the saccharide include glucose, mannose, fructose, ribose, xylose, arabinose, galactose, aldonic acids, glucitol (sorbit), maltose, cellobiose, lactose, sucrose, trehalose, and maltotriose.

1. 4. 8. Chelating Agents

A chelating agent may be used to remove unwanted ions in an aqueous ink composition for ink jet textile printing. Examples of the chelating agent include ethylenediaminetetraacetic acid and its salts (ethylenediaminetetraacetic acid disodium salt; ethylenediamine salt with nitrilotriacetic acid, hexametaphosphoric acid, pyrophosphoric acid, or metaphosphoric acid; and so forth).

1. 4. 9. Preservatives, Fungicides

An aqueous ink composition for ink jet textile printing may contain a preservative and/or a fungicide. Examples of the preservative and the fungicide include sodium benzoate, pentachlorophenol sodium salt, 2-pyridinethiol 1-oxide sodium salt, sodium sorbate, sodium dehydroacetate, 1,2-benzisothiazolin-3-one (Proxel CRL, Proxel BDN, Proxel GXL, Proxel XL-2, Proxel TN, Proxel LV from Zeneca), and 4-chloro-3-methylphenol (Preventor CMK and so forth from Bayer AG).

1. 4. 10. Others

Further, as components other than the above-described ones, additives commonly used for ink jet ink compositions, such as corrosion inhibitors, antioxidants, UV absorbers, oxygen absorbers, and dissolution aids, may also be contained.

1. 5. Manufacture and Physical Properties of Aqueous Ink Composition for Ink Jet Textile Printing

An ink composition of the embodiment is obtained by appropriately mixing the above-described respective components and, as necessary, by removing impurities through filtration or the like. As the mixing method for the respective components, a method of successively adding materials to a vessel equipped with a stirring device, such as a mechanical stirrer or a magnetic stirrer, and mixing while stirring is suitably employed.

An aqueous ink composition for ink jet textile printing is attached to a fabric by an ink jet method. For this reason, the aqueous ink composition for ink jet textile printing has a viscosity at 20°C of preferably 2 mPa·s (millipascal-second) or more and 15 mPa·s or less, more preferably 2 mPa·s or more and 10 mPa·s or less, and further preferably 3 mPa·s or more and 6 mPa·s or less. Here, the viscosity of the aqueous ink composition for ink jet textile printing can be measured by using an MCR-300 viscoelasticity tester (from Pysica). Specifically, the viscosity is measured, for example, by adjusting the temperature of the aqueous ink composition for ink jet textile printing to 20°C and reading a viscosity at a shear rate of 200 while increasing a shear rate from 10 to 1,000.

1.6. Advantageous Effects

An aqueous ink composition for ink jet textile printing of the embodiment contains lithium ions, sodium ions, and a dye in which a plurality of ligands represented by any of formula (1), formula (2), and formula (3) coordinate to a metal ion. For this reason, the ink composition exhibits satisfactory water solubility and even when dried in nozzles or the like of a recording head, can readily dissolve the dried material. In addition, satisfactory coloring properties are exhibited by using such a dye. Moreover, by including lithium ions and sodium ions, both dissolution properties and storage stability can be achieved.

2. Textile Printing Method

A textile printing method according to an embodiment includes a step of attaching (hereinafter, also referred to as "attaching step") the above-described aqueous ink composition for ink jet textile printing to a fabric by an ink jet method. Hereinafter, fabrics as well as every step that is included or may be included in the textile printing method according to the embodiment will be described.

2.1. Fabrics

An aqueous ink composition for ink jet textile printing of the embodiment is used by attaching to fabrics. Such fabrics are not particularly limited. Exemplary component materials for such fabrics include, but are not particularly limited to, natural fibers, such as cotton, hemp, wool, and silk; synthetic fibers, such as polypropylene, polyesters, cellulose acetate, cellulose triacetate, polyamides, and polyurethanes; biodegradable fibers, such as polylactic acid; and blended fibers thereof. The fabrics may be in any form of the above-mentioned fibers, such as woven fabrics, knitted fabrics, and

nonwoven fabrics, and may be formed by blending yarns.

Among these fabrics, the above-mentioned effects of the aqueous ink composition for ink jet textile printing are particularly remarkably exerted when the fabrics are formed by blending, for spinning or weaving, nylon (polyamide) fibers, such as nylon 66, nylon 6, and nylon 46. Typical examples of such fabrics include nylon fabrics and nylon/urethane blended fabrics. In the case of nylon/urethane blended fabrics, further effects can be expected when a urethane blending ratio (proportion of urethane fibers used relative to the total) is less than 20%.

Nylon fabrics and nylon/urethane blended fabrics with a low urethane blending ratio exhibit water repellency and low reactivity to dyes. For these and other reasons, it is difficult to dye these fabrics in some cases. Accordingly, an ink composition that can achieve further improved coloring properties is needed. According to an aqueous ink composition for ink jet textile printing of the embodiment, it is possible to exhibit satisfactory coloring properties even for these fabrics since the dye has a plurality of ligands as chromophores.

2. 2. Pretreatment Step

The textile printing method according to the embodiment may include a pretreatment step of applying to a fabric a pretreatment composition that contains at least either of an alkaline agent and a hydrotropic agent. By this step, the dyeing properties of a dye are further improved.

Exemplary methods of applying the pretreatment composition to a fabric include a method of immersing a fabric in the pretreatment composition, a method of applying the pretreatment composition with a roll coater or the like, and a method of spraying the pretreatment composition (ink jet method or spraying method, for example). Any of these methods can be employed.

The pretreatment composition contains at least either of an alkaline agent and a hydrotropic agent. The contents of these components in the pretreatment composition are not particularly limited and may be appropriately determined depending on the types of fabrics, for example.

When a reactive dye is used, an alkaline agent is preferably employed from a viewpoint of further improving dyeing properties of the reactive dye. Specific examples of the alkaline agent include sodium carbonate, sodium bicarbonate, sodium hydroxide, trisodium phosphate, and sodium acetate.

A hydrotropic agent is preferably used from a viewpoint of improving coloring properties of images printed on textiles. Exemplary hydrotropic agents include the urea derivatives illustrated in the foregoing section concerning the aqueous ink composition for ink jet textile printing.

The pretreatment composition may contain water. Such water is the same as the water described concerning the foregoing aqueous ink composition for ink jet textile printing. The water content is 30% by mass or more, preferably 40% by mass or more, more preferably 45% by mass or more, and further preferably 50% by mass or more based on the total amount of the pretreatment composition.

The pretreatment composition may contain a water-soluble organic solvent. Such water-soluble organic solvents can enhance wettability of the pretreatment composition with fabrics in some cases. Exemplary water-soluble organic solvents are at least one of esters, alkylene glycol ethers, cyclic esters, and alkoxyalkylamides. Moreover, water-soluble organic solvents may be nitrogen-containing compounds, saccharides, amines, and the like other than the above-mentioned exemplary solvents. Further, the pretreatment composition may contain water-soluble organic solvents that may be used for the foregoing aqueous ink composition for ink jet textile printing.

The pretreatment composition may contain a plurality of water-soluble organic solvents. If contained, the total content of water-soluble organic solvents is 0.1% by mass or more and 20% by mass or less, preferably 0.3% by mass or more and 15% by mass or less, more preferably 0.5% by mass or more and 10% by mass or less, and further preferably 1% by mass or more and 7% by mass or less based on the total pretreatment composition.

The pretreatment composition may contain a sizing agent. Exemplary sizing agents include starch substances, such as corn and wheat; cellulosic substances, such as carboxymethyl cellulose and hydroxymethyl cellulose; polysaccharides, such as sodium alginate, gum arabic, locust bean gum, tragacanth gum, guar gum, and tamarind seed; proteins, such as gelatin and casein; natural water-soluble polymers, such as tannins and lignin; and synthetic water-soluble polymers, such as polyvinyl alcohol-based compounds, polyethylene oxide-based compounds, acrylic acid-based compounds, and maleic anhydride-based compounds.

The pretreatment composition may contain a surfactant. Such surfactants are the same as those described concerning the foregoing aqueous ink composition for ink jet textile printing. When added to the pretreatment composition, the total of surfactants added is 0.01% by mass or more and 3% by mass or less, preferably 0.05% by mass or more and 2% by mass or less, further preferably 0.1% by mass or more and 1% by mass or less, and particularly preferably 0.2% by mass or more and 0.5% by mass or less based on the total pretreatment composition.

By including a surfactant in the pretreatment composition, it is possible to control wettability and permeability of an ink applied onto a pretreated fabric, thereby realizing suppressed bleeding and improved coloring properties of a printed fabric.

The pretreatment composition may contain components commonly used for textile printing pretreatment compositions, such as water, reduction inhibitors, preservatives, fungicides, chelating agents, pH adjusters, surfactants, viscosity modifiers, and antioxidants.

The pretreatment composition may be attached to a fabric by an ink jet method. In such a case, the viscosity at 20°C is set to preferably 1.5 mPa·s or more and 15 mPa·s or less, more preferably 1.5 mPa·s or more and 5 mPa·s or less, and further preferably 1.5 mPa·s or more and 3.6 mPa·s or less.

Meanwhile, the pretreatment composition may be applied by a method other than the ink jet method. Exemplary such methods include: either of noncontact-mode and contact-mode methods, such as a method of applying the pretreatment composition to a fabric by using various spraying devices, a method of applying the pretreatment composition through immersion of a fabric, and a method of applying a treatment solution to a fabric by using a brush or the like; or combined methods thereof.

When the pretreatment composition is applied to a fabric by a method other than the ink jet method, the viscosity at 20°C may be higher than the case by the ink jet method and is set to, for example, 1.5 mPa·s or more and 100 mPa·s or less, preferably 1.5 mPa·s or more and 50 mPa·s or less, and more preferably 1.5 mPa·s or more and 20 mPa·s or less.

## 2. 3. Attaching Step

The textile printing method according to the embodiment includes an attaching step of attaching the foregoing aqueous ink composition for ink jet textile printing by discharging from an ink jet head. Specifically, images are formed on fabrics by attaching ink droplets discharged in an ink jet recording mode to the fabrics. The ink jet recording mode may be any mode, and examples include a charging and deflecting mode, a continuous mode, and an on-demand mode (piezo mode, bubble jet® mode). Among these ink jet recording modes, a mode using a piezo-type ink jet recording apparatus is particularly preferable.

## 2. 4. Heat Treatment Step

The textile printing method according to the embodiment may include a heat treatment step of heat-treating fabrics to which the above-described ink composition has been attached. By performing the heat treatment step, fibers are dyed satisfactorily. The heat treatment step may employ conventionally known processes, and examples include HT process (high-temperature steaming process), HP process (high-pressure steaming process), and thermosol process.

The temperature in the heat treatment step is preferably within the range of 90°C or higher and 110°C or lower from a viewpoint of reducing damage on fabrics.

## 2. 5. Washing Step

The textile printing method according to the embodiment may include a washing step of washing fabrics after textile printing. The washing step is preferably performed after the above-described heat treatment step and can effectively remove dyes remaining without dyeing fibers. The washing step may be performed by using water, for example, and soaping treatment may be performed as necessary.

## 2. 6. Other Steps

The textile printing method according to the embodiment may include, after the above-described pretreatment step and before the above-described attaching step, a drying step for a pretreatment composition that has been applied to a fabric. The pretreatment composition may be dried through spontaneous drying but preferably through drying that involves heating from a viewpoint of increasing the drying rate. When the drying step for a pretreatment composition involves heating, examples of the heating process include, but are not particularly limited to, heat-pressing process, atmospheric steaming process, high-pressure steaming process, and thermofixing process. Moreover, exemplary heating sources include, but are not limited to, infrared rays (lamps).

## 2. 7. Advantageous Effects

According to the textile printing method of the embodiment, it is possible to perform textile printing with satisfactory coloring properties by using, in the attaching step, the foregoing aqueous ink composition for ink jet textile printing. In particular, further satisfactory coloring properties can be imparted to nylon fabrics and nylon/urethane blended fabrics.

3. Examples and Comparative Examples

Hereinafter, present disclosure will be specifically described by means of Examples. However, the present disclosure is by no means limited to these Examples. Hereinafter, "part(s)" and "%" are based on mass unless otherwise indicated. Moreover, each Example was evaluated in an environment of a temperature of 25°C and a relative humidity of 40% unless otherwise indicated.

3. 1. Preparation of Aqueous Ink Compositions for Ink Jet Textile Printing

The composition of an aqueous ink composition for ink jet textile printing of each Example and Comparative Example is shown in Tables 1 to 4. The aqueous ink composition for ink jet textile printing was prepared by mixing the components shown in Tables 1 to 4, stirring for 30 minutes or more, and filtering. As a mixing method for the respective components, materials were successively added to a vessel equipped with a mechanical stirrer and mixed with stirring. Subsequently, the resulting mixture was filtered to yield an aqueous ink composition for ink jet textile printing of each example (Examples 1 to 36, Comparative Examples 1 to 9).

| Table 1: | | | Example | | | | | | | | | | | |
|---|---|---|---|---|---|---|---|---|---|---|---|---|---|---|
| | | | 1 | 2 | 3 | 4 | 5 | 6 | 7 | 8 | 9 | 10 | 11 | 12 |
| Dye | Combination of ligands | formula (1) + formula (1) | 8.0 | 8.0 | 8.0 | 8.0 | 7.9 | 6.5 | 6.5 | 2.0 | 4.0 | 8.0 | 8.0 | 8.0 |
| | | formula (2) + formula (3) | - | - | - | - | - | - | - | - | - | - | - | - |
| | | formula (3) + formula (3) | - | - | - | - | - | - | - | - | - | - | - | - |
| | Direct Blue 86 | | - | - | - | - | - | - | - | - | - | - | - | - |
| | Acid Red 249 | | - | - | - | - | - | - | - | - | - | - | - | - |
| | Acid Orange 67 | | - | - | - | - | - | - | - | - | - | - | - | - |
| Additive | 2-Pyrrolidone | | 10.0 | 10.0 | 10.0 | 10.0 | 10.0 | 10.0 | 10.0 | 10.0 | 10.0 | - | - | 10.0 |
| | Triethylene glycol monobutyl ether | | 5.0 | 5.0 | 5.0 | 5.0 | 5.0 | 5.0 | 5.0 | 5.0 | 5.0 | 5.0 | - | 5.0 |
| | Glycerol | | 8.0 | 8.0 | 8.0 | 8.0 | 8.0 | 8.0 | 8.0 | 8.0 | 8.0 | 8.0 | - | 8.0 |
| | Triethylene glycol | | 8.0 | 8.0 | 8.0 | 8.0 | 8.0 | 8.0 | 8.0 | 8.0 | 8.0 | 8.0 | - | 8.0 |
| | Olfine PD-002W | | 0.5 | 0.5 | 0.5 | 0.5 | 0.5 | 0.5 | 0.5 | 0.5 | 0.5 | 0.5 | 0.5 | 0.5 |
| | Tripropanolamine | | 0.2 | 0.2 | 0.2 | 0.2 | 0.2 | 0.2 | 0.2 | 0.2 | 0.2 | 0.2 | 0.2 | 0.2 |
| | Proxel XL-2 | | 0.3 | 0.3 | 0.3 | 0.3 | 0.3 | 0.3 | 0.3 | 0.3 | 0.3 | 0.3 | 0.3 | 0.3 |
| | Ethylenediaminetetraacetic acid disodium salt | | 0.01 | 0.01 | 0.01 | 0.01 | 0.01 | 0.01 | 0.01 | 0.01 | 0.01 | 0.01 | 0.01 | 0.01 |
| Water | Deionized water | | balance | balance | balance | balance | balance | balance | balance | balance | balance | balance | balance | balance |
| Total (weight%) | | | 100 | 100 | 100 | 100 | 100 | 100 | 100 | 100 | 100 | 100 | 100 | 100 |
| Metal ion | | Na ion (ppm) | 2850 | 2963 | 2996 | 1350 | 2111 | 1737 | 1737 | 741 | 1463 | 2850 | 2850 | 2138 |
| | | Li ion (ppm) | 150 | 38 | 4 | 1650 | 852 | 701 | 701 | 9 | 38 | 150 | 150 | 863 |
| | | Total amount of metal ion (ppm) | 3000 | 3000 | 3000 | 3000 | 2963 | 2438 | 2438 | 750 | 1500 | 3000 | 3000 | 3000 |
| | | Li/Na ratio | 0.053 | 0.013 | 0.001 | 1.222 | 0.404 | 0.404 | 0.404 | 0.013 | 0.026 | 0.053 | 0.053 | 0.404 |

(continued)

| Table 1: | | Example 1 | Example 2 | Example 3 | Example 4 | Example 5 | Example 6 | Example 7 | Example 8 | Example 9 | Example 10 | Example 11 | Example 12 |
|---|---|---|---|---|---|---|---|---|---|---|---|---|---|
| Weight of dye with Li counterion and with Na counterion | Na salt | 7.600 | 7.900 | 7.990 | 3.600 | 5.600 | 4.200 | 4.200 | 1.900 | 3.800 | 7.600 | 7.600 | 4.200 |
| | Li salt | 0.400 | 0.100 | 0.010 | 4.400 | 2.300 | 2.300 | 2.300 | 0.100 | 0.200 | 0.400 | 0.400 | 2.300 |
| Fabric | Nylon & urethane blending ratio | 10 | 10 | 10 | 10 | 10 | 10 | 18 | 10 | 10 | 10 | 10 | 25 |
| Evaluation results | Coloring properties | A | A | A | A | A | A | B | C | B | A | A | C |
| | Light resistance | A | A | A | A | A | A | A | B | A | A | A | A |
| | Water resistance | A | A | A | A | A | B | B | B | B | A | A | B |
| | Storage properties | A | A | A | C | A | B | B | A | A | B | C | B |
| | Reliability against clogging | A | B | C | A | B | A | A | A | A | C | C | A |

| Table 2: | | | Example | | | | | | | | | | | |
|---|---|---|---|---|---|---|---|---|---|---|---|---|---|---|
| | | | 13 | 14 | 15 | 16 | 17 | 18 | 19 | 20 | 21 | 22 | 23 | 24 |
| Dye | Combinationof ligands | formula (1) + formula (1) | - | - | - | - | - | - | - | - | - | - | - | - |
| | | formula (2) + formula (3) | 8.0 | 8.0 | 8.0 | 8.0 | 7.9 | 6.5 | 6.5 | 2.0 | 4.0 | 8.0 | 8.0 | 8.0 |
| | | formula (3) + formula (3) | - | - | - | - | - | - | - | - | - | - | - | - |
| | Direct Blue 86 | | - | - | - | - | - | - | - | - | - | - | - | - |
| | Acid Red 249 | | - | - | - | - | - | - | - | - | - | - | - | - |
| | Acid Orange 67 | | - | - | - | - | - | - | - | - | - | - | - | - |
| Additive | 2-Pyrrolidone | | 10.0 | 10.0 | 10.0 | 10.0 | 10.0 | 10.0 | 10.0 | 10.0 | 10.0 | - | - | 10.0 |
| | Triethylene glycol monobutyl ether | | 5.0 | 5.0 | 5.0 | 5.0 | 5.0 | 5.0 | 5.0 | 5.0 | 5.0 | 5.0 | - | 5.0 |
| | Glycerol | | 8.0 | 8.0 | 8.0 | 8.0 | 8.0 | 8.0 | 8.0 | 8.0 | 8.0 | 8.0 | - | 8.0 |
| | Triethylene glycol | | 8.0 | 8.0 | 8.0 | 8.0 | 8.0 | 8.0 | 8.0 | 8.0 | 8.0 | 8.0 | - | 8.0 |
| | Olfine PD-002W | | 0.5 | 0.5 | 0.5 | 0.5 | 0.5 | 0.5 | 0.5 | 0.5 | 0.5 | 0.5 | 0.5 | 0.5 |
| | Tripropanolamine | | 0.2 | 0.2 | 0.2 | 0.2 | 0.2 | 0.2 | 0.2 | 0.2 | 0.2 | 0.2 | 0.2 | 0.2 |
| | Proxel XL-2 | | 0.3 | 0.3 | 0.3 | 0.3 | 0.3 | 0.3 | 0.3 | 0.3 | 0.3 | 0.3 | 0.3 | 0.3 |
| | Ethylenediaminetetraacetic acid disodium salt | | 0.01 | 0.01 | 0.01 | 0.01 | 0.01 | 0.01 | 0.01 | 0.01 | 0.01 | 0.01 | 0.01 | 0.01 |
| Water | Deionized water | | balance | balance | balance | balance | balance | balance | balance | balance | balance | balance | balance | balance |
| Total (weight%) | | | 100 | 100 | 100 | 100 | 100 | 100 | 100 | 100 | 100 | 100 | 100 | 100 |
| Metal ion | | Na ion (ppm) | 1900 | 1975 | 1998 | 900 | 1407 | 1158 | 1158 | 494 | 975 | 1900 | 1900 | 1425 |
| | | Li ion (ppm) | 100 | 25 | 3 | 1100 | 568 | 467 | 467 | 6 | 25 | 100 | 100 | 575 |
| | | Total amount of metal ion (ppm) | 2000 | 2000 | 2000 | 2000 | 1975 | 1625 | 1625 | 500 | 1000 | 2000 | 2000 | 2000 |
| | | Li/Na ratio | 0.053 | 0.013 | 0.001 | 1.222 | 0.404 | 0.404 | 0.404 | 0.013 | 0.026 | 0.053 | 0.053 | 0.404 |

(continued)

| Table 2: | | Example | | | | | | | | | | | |
|---|---|---|---|---|---|---|---|---|---|---|---|---|---|
| | | 13 | 14 | 15 | 16 | 17 | 18 | 19 | 20 | 21 | 22 | 23 | 24 |
| Weight of dye with Li counterion and with Na counterion | Na salt | 7.600 | 7.900 | 7.990 | 3.600 | 5.600 | 4.200 | 4.200 | 1.900 | 3.800 | 7.600 | 7.600 | 4.200 |
| | Li salt | 0.400 | 0.100 | 0.010 | 4.400 | 2.300 | 2.300 | 2.300 | 0.100 | 0.200 | 0.400 | 0.400 | 2.300 |
| Fabric | Nylon & urethane blending ratio | 10 | 10 | 10 | 10 | 10 | 10 | 18 | 10 | 10 | 10 | 10 | 25 |
| Evaluation results | Coloring properties | A | A | A | A | A | A | B | C | B | A | A | C |
| | Light resistance | A | A | A | A | A | A | A | B | A | A | A | A |
| | Water resistance | A | A | A | A | A | B | B | B | B | A | A | B |
| | Storage properties | A | A | A | C | A | B | B | A | A | A | C | B |
| | Reliability against clogging | A | B | C | A | B | A | A | A | A | C | C | A |

| Table 3: | | | Example | | | | | | | | | | | |
|---|---|---|---|---|---|---|---|---|---|---|---|---|---|---|
| | | | 25 | 26 | 27 | 28 | 29 | 30 | 31 | 32 | 33 | 34 | 35 | 36 |
| Dye | Combinationof ligands | formula (1) + formula (1) | - | - | - | - | - | - | - | - | - | - | - | - |
| | | formula (2) + formula (3) | - | - | - | - | - | - | - | - | - | - | - | - |
| | | formula (3) + formula (3) | 8.0 | 8.0 | 8.0 | 8.0 | 7.9 | 6.5 | 8.0 | 2.0 | 4.0 | 8.0 | 8.0 | 8.0 |
| | Direct Blue 86 | | - | - | - | - | - | - | - | - | - | - | - | - |
| | Acid Red 249 | | - | - | - | - | - | - | - | - | - | - | - | - |
| | Acid Orange 67 | | - | - | - | - | - | - | - | - | - | - | - | - |
| Additive | 2-Pyrrolidone | | 10.0 | 10.0 | 10.0 | 10.0 | 10.0 | 10.0 | 10.0 | 10.0 | 10.0 | - | - | 10.0 |
| | Triethylene glycol monobutyl ether | | 5.0 | 5.0 | 5.0 | 5.0 | 5.0 | 5.0 | 5.0 | 5.0 | 5.0 | 5.0 | - | 5.0 |
| | Glycerol | | 8.0 | 8.0 | 8.0 | 8.0 | 8.0 | 8.0 | 8.0 | 8.0 | 8.0 | 8.0 | - | 8.0 |
| | Triethylene glycol | | 8.0 | 8.0 | 8.0 | 8.0 | 8.0 | 8.0 | 8.0 | 8.0 | 8.0 | 8.0 | - | 8.0 |
| | Olfine PD-002W | | 0.5 | 0.5 | 0.5 | 0.5 | 0.5 | 0.5 | 0.5 | 0.5 | 0.5 | 0.5 | 0.5 | 0.5 |
| | Tripropanolamine | | 0.2 | 0.2 | 0.2 | 0.2 | 0.2 | 0.2 | 0.2 | 0.2 | 0.2 | 0.2 | 0.2 | 0.2 |
| | Proxel XL-2 | | 0.3 | 0.3 | 0.3 | 0.3 | 0.3 | 0.3 | 0.3 | 0.3 | 0.3 | 0.3 | 0.3 | 0.3 |
| | Ethylenediaminetetraacetic acid disodium salt | | 0.01 | 0.01 | 0.01 | 0.01 | 0.01 | 0.01 | 0.01 | 0.01 | 0.01 | 0.01 | 0.01 | 0.01 |
| Water | Deionized water | | balance | balance | balance | balance | balance | balance | balance | balance | balance | balance | balance | balance |
| Total (weight%) | | | 100 | 100 | 100 | 100 | 100 | 100 | 100 | 100 | 100 | 100 | 100 | 100 |
| Metal ion | | Na ion (ppm) | 2375 | 2469 | 2497 | 1125 | 1728 | 1066 | 2375 | 617 | 1234 | 2375 | 2375 | 1781 |
| | | Li ion (ppm) | 125 | 31 | 3 | 1375 | 741 | 719 | 125 | 8 | 32 | 125 | 125 | 719 |
| | | Total amount of metal ion (ppm) | 2500 | 2500 | 2500 | 2500 | 2469 | 1785 | 2500 | 625 | 1266 | 2500 | 2500 | 2500 |
| | | Li/Na ratio | 0.053 | 0.013 | 0.001 | 1.222 | 0.429 | 0.674 | 0.053 | 0.013 | 0.026 | 0.053 | 0.053 | 0.404 |

(continued)

| Table 3: | | Example | | | | | | | | | | | |
|---|---|---|---|---|---|---|---|---|---|---|---|---|---|
| | | 25 | 26 | 27 | 28 | 29 | 30 | 31 | 32 | 33 | 34 | 35 | 36 |
| Weight of dye with Li counterion and with Na counterion | Na salt | 7.600 | 7.900 | 7.990 | 3.600 | 5.600 | 4.200 | 7.600 | 1.900 | 3.800 | 7.600 | 7.600 | 4.200 |
| | Li salt | 0.400 | 0.100 | 0.010 | 4.400 | 2.300 | 2.300 | 0.400 | 0.100 | 0.200 | 0.400 | 0.400 | 2.300 |
| Fabric | Nylon & urethane blending ratio | 10 | 10 | 10 | 10 | 10 | 10 | 18 | 10 | 10 | 10 | 10 | 25 |
| Evaluation results | Coloring properties | A | A | A | A | A | A | B | C | B | A | A | C |
| | Light resistance | A | A | A | A | A | A | A | B | A | A | A | A |
| | Water resistance | A | A | A | A | A | B | B | B | B | A | A | B |
| | Storage properties | A | A | A | C | A | B | B | A | A | A | C | B |
| | Reliability against clogging | A | B | C | A | B | A | A | A | A | C | C | A |

Table 4:

| | | | Comparative Example | | | | | | | | |
|---|---|---|---|---|---|---|---|---|---|---|---|
| | | | 1 | 2 | 3 | 4 | 5 | 6 | 7 | 8 | 9 |
| Dye | Combination of ligands | formula (1) + formula (1) | 10.0 | 8.0 | - | - | - | - | - | - | - |
| | | formula (2) + formula (3) | - | - | 8.0 | 8.0 | - | - | - | - | - |
| | | formula (3) + formula (3) | - | - | - | - | 8.0 | 8.0 | - | - | - |
| | Direct Blue 86 | | - | - | - | - | - | - | 8.0 | - | - |
| | Acid Red 249 | | - | - | - | - | - | - | - | 8.0 | - |
| | Acid Orange 67 | | - | - | - | - | - | - | - | - | 8.0 |
| Additive | 2-Pyrrolidone | | 10.0 | 10.0 | 10.0 | 10.0 | 10.0 | 10.0 | 10.0 | 10.0 | 10.0 |
| | Triethylene glycol monobutyl ether | | 5.0 | 5.0 | 5.0 | 5.0 | 5.0 | 5.0 | 5.0 | 5.0 | 5.0 |
| | Glycerol | | 8.0 | 8.0 | 8.0 | 8.0 | 8.0 | 8.0 | 8.0 | 8.0 | 8.0 |
| | Triethylene glycol | | 8.0 | 8.0 | 8.0 | 8.0 | 8.0 | 8.0 | 8.0 | 8.0 | 8.0 |
| | Olfine PD-002W | | 0.5 | 0.5 | 0.5 | 0.5 | 0.5 | 0.5 | 0.5 | 0.5 | 0.5 |
| | Tripropanolamine | | 0.2 | 0.2 | 0.2 | 0.2 | 0.2 | 0.2 | 0.2 | 0.2 | 0.2 |
| | Proxel XL-2 | | 0.3 | 0.3 | 0.3 | 0.3 | 0.3 | 0.3 | 0.3 | 0.3 | 0.3 |
| | Ethylenediaminetetraacetic acid disodium salt | | 0.01 | 0.01 | 0.01 | 0.01 | 0.01 | 0.01 | 0.01 | 0.01 | 0.01 |
| Water | Deionized water | | balance | balance | balance | balance | balance | balance | balance | balance | balance |
| Total (weight%) | | | 100 | 100 | 100 | 100 | 100 | 100 | 100 | 100 | 100 |
| Metal ion | | Na ion (ppm) | 3600 | 0 | 3200 | 0 | 3600 | 0 | 3800 | 3800 | 3800 |
| | | Li ion (ppm) | 0 | 2000 | 0 | 1750 | 0 | 2000 | 200 | 200 | 200 |
| | | Total amount of metal ion (ppm) | 3600 | 2000 | 3200 | 1750 | 3600 | 2000 | 4000 | 4000 | 4000 |
| | | Li/Na ratio | 0.000 | - | 0.000 | - | 0.000 | - | 0.053 | 0.053 | 0.053 |
| Weight of dye with Li counterion and with Na counterion | | Na salt | 10.000 | 2.000 | 10.000 | 2.000 | 10.000 | 2.000 | 7.600 | 7.600 | 7.600 |
| | | Li salt | 0.000 | 6.000 | 0.000 | 6.000 | 0.000 | 6.000 | 0.400 | 0.400 | 0.400 |

(continued)

| Table 4: | | Comparative Example | | | | | | | | |
|---|---|---|---|---|---|---|---|---|---|---|
| | | 1 | 2 | 3 | 4 | 5 | 6 | 7 | 8 | 9 |
| Fabric | Nylon & urethane blending ratio | 10 | 10 | 10 | 10 | 10 | 10 | 10 | 10 | 10 |
| Evaluation results | Coloring properties | A | A | A | A | A | A | D | D | D |
| | Light resistance | A | A | A | A | A | A | D | D | D |
| | Water resistance | A | A | A | A | A | A | C | D | D |
| | Storage properties | A | D | A | D | D | D | A | A | B |
| | Reliability against clogging | D | A | D | A | A | A | A | A | A |

As a cyclic amide, 2-pyrrolidone was used. As organic solvents, glycerol and triethylene glycol monobutyl ether were used. As a surfactant, Olfine® PD-002W (trade name from Nissin Chemical Industry Co. Ltd.), which is a nonionic (acetylenic glycol) surfactant, was used. As a pH adjuster, tripropanolamine was used. As a corrosion inhibitor and a fungicide, Proxel XL-2 (from Zeneca), and as a chelating agent, ethylenediaminetetraacetic acid disodium salt were used. Deionized water was added such that the total mass of each ink of the Examples and the Comparative Examples is adjusted to 100.0% by mass.

The dyes in Tables 1 to 4 are as follows.

- Dye with ligand combination of formula (1) + formula (1): a dye represented by the following structure where Z is Li or Na

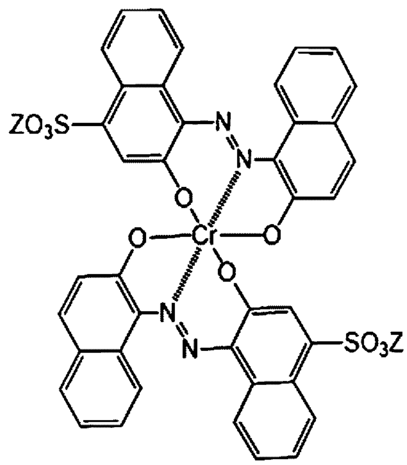

- Dye with ligand combination of formula (2) + formula (3): a dye represented by the following structure where Z is Li or Na

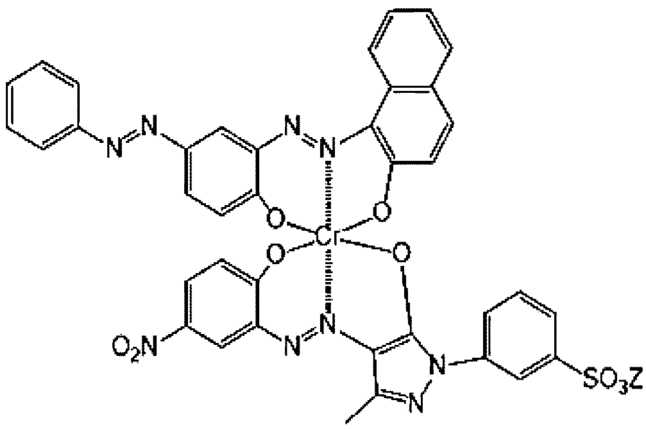

- Dye with ligand combination of formula (3) + formula (3): a dye represented by the following structure where Z is Li or Na

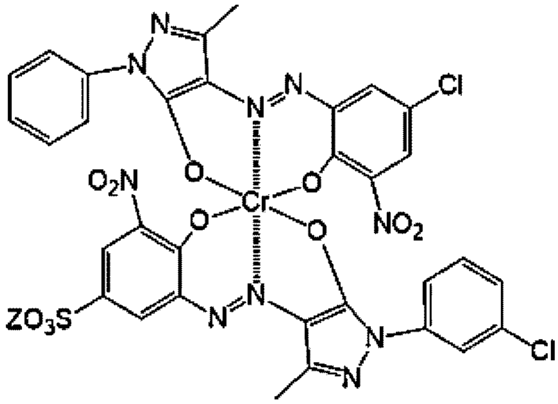

- C.I. Direct Blue 86: reagent
- C.I. Acid Red 249: reagent
- C.I. Acid Orange 67: reagent

Tables 1 to 4 show the mass-based concentrations (ppm) of sodium ions and lithium ions contained in each aqueous ink composition for ink jet textile printing as well as the concentration ratio of lithium ions to sodium ions ($Li^+/Na^+$). The mass-based concentrations of sodium ions and lithium ions were determined by quantitative analysis of an obtained composition by ion chromatography (940 Professional IC Vario from Metrohm AG).

For each dye, a Na salt where the counterion is sodium ion and a Li salt where the counterion is lithium ion were prepared. The Li/Na ratio of each example was adjusted by varying the contents of the Li salt and the Na salt as shown in the Tables.

For a fabric used in each example, a urethane ratio relative to the total is shown in % as "nylon & urethane blending ratio" in the Tables. For example, "10" in the corresponding column indicates a blended fabric of 10% urethane and 90% nylon.

3. 2. Evaluation Methods

Solid printing (720 × 720 dpi full discharge, normal mode) was performed by Monna Lisa (ink jet textile printer from F.lli Robustelli S.r.l) filled with an aqueous ink composition for ink jet textile printing of each example on a nylon/urethane blended fabric with the blending ratio shown in Tables 1 to 4.

3. 2. 1. Evaluation of Coloring Properties

Solid printing (720 × 720 dpi full discharge, normal mode) was performed by Monna Lisa (ink jet textile printer from F.lli Robustelli S.r.l.) filled with an ink composition of each example prepared as described above on the following fabric. The resulting fabric was post-treated under the following conditions to yield a printed fabric.

Post-treatment Conditions

- Nylon/polyurethane blended: steam treatment (102°C for 40 min) + washing with cold water for 10 min + washing with hot water for 10 min + washing with cold water

The OD value in a printed region of the obtained fabric was determined as follows. The optical density (OD value) in the printed region was measured by using an FD-7 spectrodensitometer (from Konica Minolta, Inc.) under the conditions [density status: DIN (DIN16536), measurement conditions: M2 (illuminant A + UV cut), illuminant: D65, observer: 2°].

The evaluation results based on the following evaluation criteria are shown in Tables 1 to 4. When the evaluation result is C or better, satisfactory effects are considered to be obtained.

Evaluation Criteria

A: OD value of 1.50 or more
B: OD value of 1.45 or more and less than 1.50
C: OD value of 1.40 or more and less than 1.45
D: OD value of less than 1.40

3. 2. 2. Evaluation of Light Resistance

A printed fabric of each example was exposed for 10 days by using a Xenon weather meter (product name "XL-75s" from Suga Test Instruments Co. Ltd.) under conditions of 30°C, relative humidity of 50%RH, and illuminance of 75,000 lux. Regarding the color of a sample before and after the exposure, L*, a*, and b* values of each printed fabric were measured by using a spectrodensitometer (trade name "Spectrolino" from X-Rite, Inc.) under the conditions (illumination: D65, density standard: DIN_NB, observer: 2°, filter: UV) and a color difference ($\Delta E^*$) of the printed fabric before and after the exposure (initial and on the tenth day) was calculated based on the following calculation formula. Light resistance was evaluated in accordance with the following evaluation criteria, and the results are shown in Tables 1 to 4.

$$\Delta E^* = [(\Delta L^*)^2 + (\Delta a^*)^2 + (\Delta b^*)^2]^{1/2}$$

$$\Delta L^* = L^*_1 - L^*_2$$

$$\Delta a^* = a^*_1 - a^*_2$$

$$\Delta b^* = b^*_1 - b^*_2$$

where $L^*_1$, $a^*_1$, and $b^*_1$ represent initial measured values for a printed fabric, and $L^*_2$, $a^*_2$, and $b^*_2$ represent measured values after exposure for 10 days.

Evaluation Criteria

A: $\Delta E^*$ of less than 10
B: $\Delta E^*$ of 10 or more and less than 12.5
C: $\Delta^*$ of 12.5 or more and less than 15
D: $\Delta E^*$ of 15 or more

3. 2. 3. Evaluation of Water Resistance

A test for color fastness to water (in accordance with ISO 105-E01) was performed, and the evaluation results by the following criteria are shown in Tables 1 to 4. In all the tests, cotton fabrics were used as adjacent fabrics (described in ISO 105-F02) and staining (color transfer) of these fabrics was observed.

Evaluation Criteria

A: grade 4/5 or higher
B: grade 4 or grade 3/4
C: grade 3 or grade 2/3
D: grade 2 or lower

3. 2. 4. Evaluation of Storage Properties

To evaluate storage properties (storage stability), extraneous materials were assessed. First, ink cartridges for PX-G930 were each filled with about 20 g of an aqueous ink composition for ink jet textile printing of each Example and

Comparative Example and left in a low-temperature environment (0°C for 10 days) and in a high-temperature environment (60°C for 5 days), respectively. Subsequently, all the content of each cartridge was filtered through a metal mesh filter (pore size of 10 $\mu$m), and extraneous materials trapped by the metal mesh filter were counted per 1 $mm^2$. Generation of extraneous materials was evaluated based on the obtained number in accordance with the following criteria. The results in accordance with the following evaluation criteria are shown in Tables 1 to 4. When the evaluation result is C or better, satisfactory effects are considered to be obtained. Here, it is known that extraneous materials observed in the low-temperature environment are aggregated extraneous materials derived from a dye, and extraneous materials observed in the high-temperature environment are fatty acid salt extraneous materials (stearic acid salts, for example) derived from an apparatus member.

Evaluation Criteria

A: the number of crystalline extraneous materials per 1 $mm^2$ of less than 5
B: the number of crystalline extraneous materials per 1 $mm^2$ of 5 or more and less than 10
C: the number of crystalline extraneous materials per 1 $mm^2$ of 10 or more and less than 30
D: the number of crystalline extraneous materials per 1 $mm^2$ of 30 or more

3. 2. 5. Evaluation of Reliability against Clogging

The reliability against clogging was evaluated. The evaluation of reliability against clogging corresponds to the evaluation of water solubility of an aqueous ink composition for ink jet textile printing. All the head rows of an ink jet printer (PX-G930 from Seiko Epson Corporation) were filled with a prepared aqueous ink composition for ink jet textile printing of each example and confirmed to discharge the ink composition normally. Subsequently, the recording head was moved from the standby position, stopped in the printing region, and left in the printing region in an environment of 40°C and 20%RH for 7 days. After that, the recording head was returned to the standby position, cleaning operation was performed, and the number of times the cleaning operation was performed to recover normal discharge was counted. The evaluation criteria are as follows, and the results are shown in Tables 1 to 4. When the evaluation result is C or better, satisfactory effects are considered to be obtained.

Evaluation Criteria

A: recovery of all the nozzles by cleaning once or less
B: recovery of all the nozzles by cleaning twice or three times
C: recovery of all the nozzles by cleaning four times or more and six times or less
D: no recovery even after cleaning six times

3. 3. Evaluation Results

As shown in Tables 1 to 3, the aqueous ink compositions for ink jet textile printing of the Examples that comprise lithium ions, sodium ions, and a dye in which a plurality of ligands represented by any of formula (1), formula (2), and formula (3) coordinate to a metal ion exhibit satisfactory results in all the coloring properties, storage properties, and reliability against clogging (water solubility). In contrast, the inks of Comparative Examples 1 to 6 that comprise either of lithium ions or sodium ions are unsatisfactory in storage properties or water solubility. Moreover, it was revealed that Comparative Examples 7 to 9 that comprise dyes other than the dye in which a plurality of ligands represented by any of formula (1), formula (2), and formula (3) coordinate to a metal ion are unsatisfactory in coloring properties.

## Claims

**1.** An aqueous ink composition for ink jet textile printing comprising:

lithium ions;
sodium ions; and
a dye in which a plurality of ligands represented by any of the following formula (1), formula (2), and formula

(3) coordinate to a metal atom:

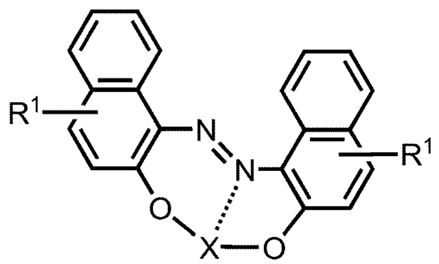

... (1)

wherein:

X represents a coordinated metal atom;
$R^1$ is selected from H and $SO_3Z$;
a plurality of $R^1$ may be the same or different from each other;
at least one of $R^1$ is $SO_3Z$; and
Z is at least one selected from a hydrogen atom, an alkali metal atom, an alkaline earth atom, and ammonium,

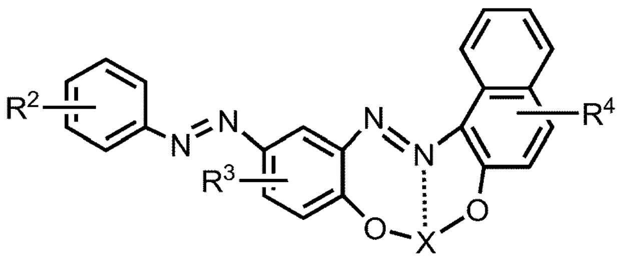

... (2)

wherein:

X is a coordinated metal atom;
$R^2$, $R^3$, and $R^4$ are each independently selected from H and $SO_3Z$; and
Z is at least one selected from a hydrogen atom, an alkali metal atom, an alkaline earth atom, and ammonium,

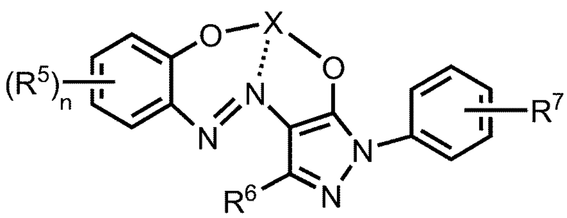

... (3)

wherein:

X is a coordinated metal atom;
$R^5$ is selected from H, $NO_2$, an alkyl group having 1 or more and 3 or less carbon atoms, Cl, and $SO_3Z$;
n is an integer of 1 or more and 4 or less;
when a plurality of $R^5$ exist, a plurality of $R^5$ may be the same or different from each other;
$R^6$ is selected from H, $CH_3$, and $SO_3Z$;
$R^7$ is selected from H, $NO_2$, Cl, and $SO_3Z$;
at least one of $R^5$, $R^6$, and $R^7$ is $SO_3Z$; and
Z is at least one selected from a hydrogen atom, an alkali metal atom, an alkaline earth atom, and ammonium.

2. The aqueous ink composition for ink jet textile printing according to claim 1, wherein the dye is selected from: a dye in which two ligands represented by formula (1) coordinate to the metal atom; a dye in which one ligand represented by formula (2) and one ligand represented by formula (3) coordinate to the metal atom; and a dye in which two ligands represented by formula (3) coordinate to the metal atom.

3. The aqueous ink composition for ink jet textile printing according to claim 1 or claim 2, wherein a concentration ratio of the lithium ions to the sodium ions ($Li^+/Na^+$) is 0.01 or more and 0.6 or less.

4. The aqueous ink composition for ink jet textile printing according to any one of the preceding claims, wherein the metal atom is a chromium atom.

5. The aqueous ink composition for ink jet textile printing according to any one of the preceding claims, further comprising one or more of a lactam and a polyol as organic solvents.

6. The aqueous ink composition for ink jet textile printing according to any one of the preceding claims, wherein a content of the dye is 2.0% by mass or more and 8.0% by mass or less based on a total amount of the ink composition.

7. The aqueous ink composition for ink jet textile printing according to any one of the preceding claims, wherein an object on which textile printing is performed is a nylon fabric or a nylon/urethane blended fabric.

8. An ink jet textile printing method comprising discharging, from an ink jet head, the aqueous ink composition for ink jet textile printing according to any one of the preceding claims, thereby attaching to a nylon fabric or a nylon/urethane blended fabric.

## Patentansprüche

1. Wässrige Tintenzusammensetzung für Tintenstrahltextildruck, umfassend:

   Lithiumionen;
   Natriumionen; und
   einen Farbstoff, in dem mehrere Liganden, dargestellt durch eine der folgenden Formel (1), Formel (2) und Formel (3), zu einem Metallatom koordinieren:

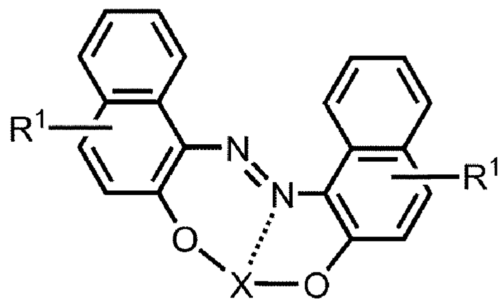

   wobei:

   X ein koordiniertes Metallatom darstellt;
   $R^1$ ausgewählt ist aus H und $SO_3Z$;
   mehrere von $R^1$ dieselben oder unterschiedlich sein können;
   mindestens eines von $R^1$ $SO_3Z$ ist; und
   Z mindestens eines ist, ausgewählt aus einem Wasserstoffatom, einem Alkalimetallatom, einem Erdalkaliatom und Ammonium,

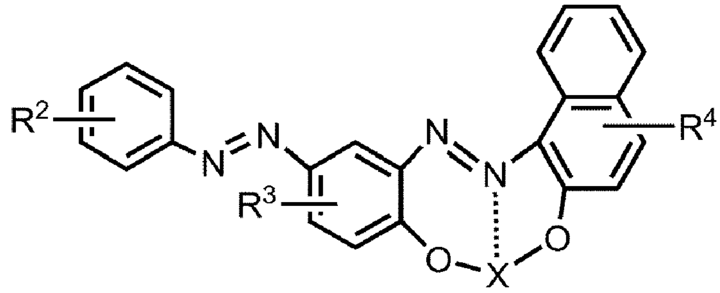

wobei:

X ein koordiniertes Metallatom ist;
$R^2$, $R^3$ und $R^4$ jeweils unabhängig ausgewählt sind aus H und $SO_3Z$; und
Z mindestens eines ist, ausgewählt aus einem Wasserstoffatom, einem Alkalimetallatom, einem Erdalkaliatom und Ammonium,

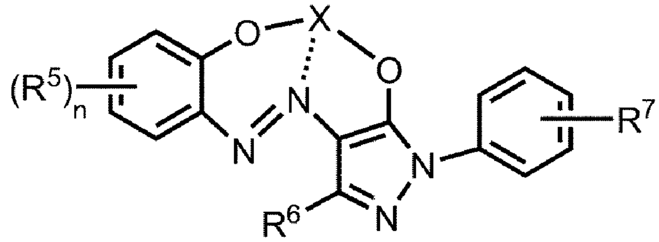

wobei:

X ein koordiniertes Metallatom ist;
$R^5$ ausgewählt ist aus H, $NO_2$, einer Alkylgruppe mit 1 oder mehr und 3 oder weniger Kohlenstoffatomen, Cl und $SO_3Z$;
n eine ganze Zahl von 1 oder mehr und 4 oder weniger ist;
wenn mehrere $R^5$ vorhanden sind, mehrere $R^5$ dieselben oder unterschiedlich sein können;
$R^6$ ausgewählt ist aus H, $CH_3$ und $SO_3Z$;
$R^7$ ausgewählt ist aus H, $NO_2$, Cl und $SO_3Z$;
mindestens eines von $R^5$, $R^6$ und $R^7$ $SO_3Z$ ist; und
Z mindestens eines ist, ausgewählt aus einem Wasserstoffatom, einem Alkalimetallatom, einem Erdalkaliatom und Ammonium.

**2.** Wässrige Tintenzusammensetzung für Tintenstrahltextildruck nach Anspruch 1, wobei der Farbstoff ausgewählt ist aus: einem Farbstoff, in dem zwei Liganden, dargestellt durch Formel (1), zu dem Metallatom koordinieren; einem Farbstoff, in dem ein Ligand, dargestellt durch Formel (2) und ein Ligand, dargestellt durch Formel (3), zu dem Metallatom koordinieren; und einem Farbstoff, in dem zwei Liganden, dargestellt durch Formel (3), zu dem Metallatom koordinieren.

**3.** Wässrige Tintenzusammensetzung für Tintenstrahltextildruck nach Anspruch 1 oder Anspruch 2, wobei ein Konzentrationsverhältnis der Lithiumionen zu den Natriumionen ($Li^+/Na^+$) 0,01 oder mehr und 0,6 oder weniger ist.

**4.** Wässrige Tintenzusammensetzung für Tintenstrahltextildruck nach einem der vorstehenden Ansprüche, wobei das Metallatom ein Chromatom ist.

**5.** Wässrige Tintenzusammensetzung für Tintenstrahltextildruck nach einem der vorstehenden Ansprüche, weiter umfassend
eines oder mehrere von einem Lactam und einem Polyol als organische Lösemittel.

**6.** Wässrige Tintenzusammensetzung für Tintenstrahltextildruck nach einem der vorstehenden Ansprüche, wobei ein Gehalt des Farbstoffs 2,0 Masseprozent oder mehr und 8,0 Masseprozent oder weniger ist, basierend auf einer

Gesamtmenge der Tintenzusammensetzung.

7. Wässrige Tintenzusammensetzung für Tintenstrahltextildruck nach einem der vorstehenden Ansprüche, wobei ein Objekt, auf dem Textildruck durchgeführt wird, ein Nylonstoff oder ein Nylon/Urethan-gemischter Stoff ist.

8. Tintenstrahltextildruckverfahren, umfassend
Abgeben, aus einem Tintenstrahlkopf, der wässrigen Tintenzusammensetzung für Tintenstrahltextildruck nach einem der vorstehenden Ansprüche, wodurch sie an einem Nylonstoff oder einem Nylon/Urethan-gemischten Stoff haftet.

## Revendications

1. Composition d'encre aqueuse pour l'impression textile par jet d'encre comprenant :

des ions de lithium ;
des ions de sodium ; et
un colorant où une pluralité de ligands représentés par l'une quelconque des formules suivantes : formule (1), formule (2), et formule (3), sont en coordination avec un atome de métal :

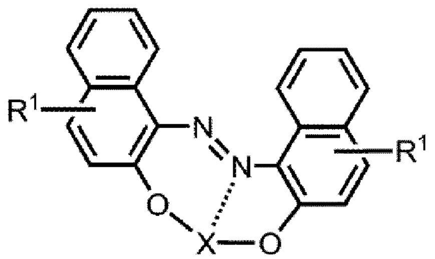

··· (1)

dans laquelle :

X représente un atome de métal coordonné ;
$R^1$ est sélectionné parmi H et $SO_3Z$ ;
une pluralité de $R^1$ peuvent être égaux ou différents entre eux ;
au moins l'un parmi $R^1$ est $SO_3Z$ ; et
Z est au moins l'un sélectionné parmi un atome d'hydrogène, un atome de métal alcalin, un atome alcalino-terreux, et de l'ammonium,

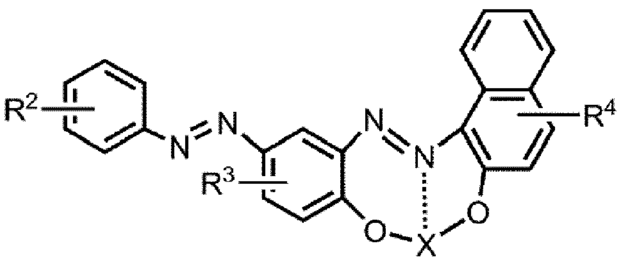

··· (2)

dans laquelle :

X est un atome de métal coordonné ;
$R^2$, $R^3$ et $R^4$ sont chacun sélectionnés indépendamment parmi H et $SO_3Z$ ; et
Z est au moins l'un sélectionné parmi un atome d'hydrogène, un atome de métal alcalin, un atome alcalino-terreux, et de l'ammonium,

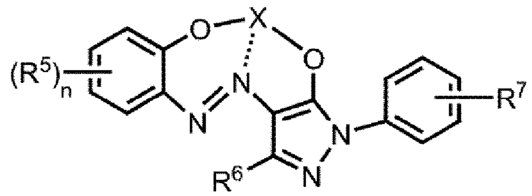

··· (3)

dans laquelle :

X est un atome de métal coordonné ;
$R^5$ est sélectionné parmi H, $NO_2$ et un groupe alkyle ayant 1 ou plus et 3 ou moins d'atomes de carbone, Cl, et $SO_3Z$ ;
n est un nombre entier de 1 ou plus et 4 ou moins ;
s'il y a une pluralité de $R^5$, une pluralité de $R^5$ peuvent être les mêmes ou différents entre eux ;
$R^6$ est sélectionné parmi H, $CH_3$ et $SO_3Z$ ;
$R^7$ est sélectionné parmi H, $NO_2$, Cl, et $SO_3Z$ ;
au moins l'un parmi $R^5$, $R^6$, et $R^7$ est $SO_3Z$ ; et
Z est au moins l'un sélectionné parmi un atome d'hydrogène, un atome de métal alcalin, un atome alcalino-terreux, et de l'ammonium.

**2.** Composition d'encre aqueuse pour l'impression textile par jet d'encre selon la revendication 1, dans laquelle le colorant est sélectionné parmi : un colorant où deux ligands représentés par la formule (1) sont en coordination avec un atome de métal ; un colorant où un ligand représenté par la formule (2) et un ligand représenté par la formule (3) sont en coordination avec l'atome de métal ; et un colorant où deux ligands représentés par la formule (3) sont en coordination avec l'atome de métal.

**3.** Composition d'encre aqueuse pour l'impression textile par jet d'encre selon la revendication 1 ou la revendication 2, dans laquelle un rapport de concentration entre les ions de lithium et les ions de sodium (Li*/Na*) est de 0,01 ou plus et 0,6 ou moins.

**4.** Composition d'encre aqueuse pour l'impression textile par jet d'encre selon l'une quelconque des revendications précédentes, dans laquelle l'atome de métal est un atome de chrome.

**5.** Composition d'encre aqueuse pour l'impression textile par jet d'encre selon l'une quelconque des revendications précédentes, comprenant en outre : un ou plusieurs parmi un lactame et un polyol en tant que solvants organiques.

**6.** Composition d'encre aqueuse pour l'impression textile par jet d'encre selon l'une quelconque des revendications précédentes, dans laquelle une teneur du colorant est de 2,0 % en masse ou plus et 8,0 % en masse ou moins sur la base d'une quantité totale de la composition d'encre.

**7.** Composition d'encre aqueuse pour l'impression textile par jet d'encre selon l'une quelconque des revendications précédentes, dans laquelle un objet sur lequel l'impression textile est réalisée est un tissu en nylon ou un tissu mélangé en nylon/uréthane.

**8.** Procédé d'impression sur textile par jet d'encre comprenant : la décharge, à partir d'une tête à jet d'encre, de la composition d'encre aqueuse pour l'impression textile par jet d'encre selon l'une quelconque des revendications précédentes, en se fixant ainsi sur un tissu en nylon ou un tissu mélangé en nylon/uréthane.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2018109140 A